# EUROPÄISCHE PATENTSCHRIFT

(11) **EP 4 485 740 B1**
(45) Veröffentlichungstag und Bekanntmachung des Hinweises auf die Patenterteilung: **02.09.2026**
(21) Anmeldenummer: 24206652.0
(22) Anmeldetag: 27.10.2017
(51) Int. Cl.: H02J 3/18, H02P 27/04, H02P 9/48, H02J 3/46, H02J 3/38, H02P 9/42

(54) **VERFAHREN ZUM BETREIBEN EINER WINDENERGIEANLAGE**
METHOD FOR OPERATING A WIND TURBINE
PROCÉDÉ DE FONCTIONNEMENT D'UNE ÉOLIENNE

(30) Priorität: 28.10.2016 DE 102016120700
(43) Veröffentlichungstag der Anmeldung: 01.01.2025
(62) Dokumentnummer(n) der früheren Anmeldung(en) nach Art. 76 EPÜ: 17797890.5 / 3 533 125
(73) Patentinhaber: Wobben Properties GmbH, 26607 Aurich (DE)
(72) Erfinder: Busker, Kai, 26629 Großefehn (DE); Mackensen, Ingo, 26607 Aurich (DE); Brombach, Johannes, 13437 Berlin (DE); Quitmann, Eckard, 28199 Bremen (DE); Emanuel, Hanna, 28203 Bremen (DE); Martin Schellschmidt, Martin, 26624 Südbrookmerland (DE)
(74) Vertreter: Eisenführ Speiser

(56) Entgegenhaltungen:
- EP-A1- 2 573 896
- WO-A1-03/030329
- WO-A2-2010/108910
- CN-A- 105 074 203
- DE-A1- 102008 034 531

## Beschreibung

Die vorliegende Erfindung betrifft ein Verfahren zum Betreiben einer an einem Netzanschlusspunkt eines elektrischen Versorgungsnetzes angeschlossenen Windenergieanlage zum Erzeugen und Einspeisen elektrischer Energie in ein elektrisches Versorgungsnetz. Weiterhin betrifft die vorliegende Erfindung eine an einem Netzanschlusspunkt eines elektrischen Versorgungsnetzes angeschlossenen Windenergieanlage sowie einen an einem Netzanschlusspunkt angeschlossenen Windpark.

Das Einspeisen elektrischer Energie in ein elektrisches Versorgungsnetz, wie bspw. dem europäischen Verbundnetz, welches eine Netznennfrequenz von 50 Hz aufweist, ist allgemein bekannt. Ganz generell weisen elektrische Versorgungsnetze dabei einen sicheren Netzzustand auf, d.h. sie sind insbesondere in Hinsicht auf ihre Netzfrequenz, mit der sie betrieben werden, stabil. Die Netzfrequenz schwankt dabei üblicherweise also nur um wenige Hundertstel der Netznennfrequenz.

Durch verschiedenartige Fehler im elektrischen Versorgungsnetz, den sogenannten Netzfehlern, wie bspw. einem Kurzschluss, kann es aber dazu kommen, dass das elektrische Versorgungsnetz einen gefährdeten Netzzustand erreicht. Das Netz weist dann eine Störung auf. Störungen können zudem aber auch schon durch eine Abtrennung eines großen Verbrauchers oder einer großen Erzeugungseinheit entstehen.

Eine Auswirkung solcher Störungen ist beispielsweise die sogenannte Überfrequenz bzw. die kritische Überfrequenz. In einem solchen Fall weist das Versorgungsnetz dann eine Netzfrequenz auf, die deutlich oberhalb der Netznennfrequenz liegt. Beispielsweise beträgt die Netzfrequenz dann 50,2 Hz obwohl die Netznennfrequenz nur 50 Hz ist.

Üblicherweise reduzieren in einem solchen Fall fast alle Erzeugungseinheiten ihre Ausgangsleistung in Abhängigkeit der Netzfrequenz, um sich am Ausgleich des Leistungsgleichgewichtes zu beteiligen. Dieser Vorgang wird auch als Überfrequenz-Leistungsreduktion bezeichnet.

Die Überfrequenz-Leistungsreduktion ist dabei grundsätzlich darauf ausgelegt, die Netzfrequenz bei hohen Leistungsüberschüssen zu stabilisieren. Gelingt dies nicht, steigt die Netzfrequenz weiter an, bis zu einem kritischen Schwellenwert, beispielsweise 51,5 Hz, bei dem sich die Erzeugungseinheiten in der Regel vom Versorgungsnetz trennen.

Windenergieanlagen beteiligen sich an der Leistungsreduktion zumeist über eine Verstellung der Rotorblätter, wodurch der Ertrag der Windenergieanlage verringert und dadurch die elektrische Generatorleistung reduziert wird. Die Windenergieanlage speist daraufhin zeitlich verzögert weniger elektrische Leistung in das elektrische Versorgungsnetz ein.

Sobald sich die Netzfrequenz dann wieder normalisiert hat, wird die elektrische Generatorleistung entsprechend erhöht, um wiederum zeitverzögert wieder mehr elektrische Leistung in das Versorgungsnetz einzuspeisen.

Durch die zunehmende Durchdringung des elektrischen Versorgungsnetzes mit Erzeugern erneuerbarer Energien, wie beispielsweise Windenergieanlagen, die größtenteils leistungselektronisch an das Versorgungsnetz gekoppelt sind, beispielsweise mit einem Leistungswechselrichter, werden sich die zukünftigen Versorgungsnetzstrukturen bzw. Netztopologien weiterhin verändern.

Insbesondere wird die Anzahl vorwiegend konventioneller Kraftwerke stark abnehmen und damit auch der Betrag der im Versorgungsnetz befindlichen Schwungmassen, die einen dämpfenden, insbesondere frequenzschwankungsdämpfenden, Effekt auf das elektrische Versorgungsnetz haben.

Dadurch kann sich das Verhalten des Netzes verändern und das Stabilisieren des Netzes wird zunehmend erschwert werden. Zudem wird es hierdurch erforderlich, dass Erzeuger regenerativer Energien verstärkt für die Stabilisierung des Netzes sorgen müssen.

Als allgemeiner Stand der Technik sei auf folgende Dokumente hingewiesen: DE 10 2012 203 334 A1, DE 10 2013 206 119 A1 und DE 10 2014 104 287 A1.

WO 2010/108910 A2 beschreibt ein Verfahren zum Betreiben einer Windenergieanlage unter Ausnutzung der Massenträgheit eines Rotor-Generator-Systems.

DE 10 2008 034 531 A1 beschreibt ein Verfahren zum Steuern eines Umrichters einer Windenergieanlage, wobei der Umrichter so gesteuert wird, dass die vom Umrichter abzugebende Blindleistung in Abhängigkeit einer Änderung einer abgegebenen Wirkleistung gesteuert wird.

EP 2 573 896 A1 Dokument D3 beschreibt ein Verfahren zum Steuern eines Offshore Parks.

WO 03/030329 A1 beschreibt ein Verfahren zum Steuern eines Wechselrichters einer Windenergieanlage in Abhängigkeit eines Phasenwinkels.

CN 105 074 203 A beschreibt ein Verfahren zum Betreiben einer an einem Netzanschlusspunkt eines elektrischen Versorgungsnetzes angeschlossenen Windenergieanlage gemäß dem Obergriff des Anspruchs 1.

Aufgabe der vorliegenden Erfindung ist es somit, eines der obengenannten Probleme zu adressieren. Insbesondere soll eine Lösung vorgeschlagen werden, die es ermöglicht mit einer Windenergieanlage auf zukünftige Regelungsprobleme im Versorgungsnetz einzugehen. Zumindest aber soll eine Alternative zum bisher Bekanntem vorgeschlagen werden.

Erfindungsgemäß wird somit ein Verfahren zum Steuern einer an einem Netzanschlusspunkt eines elektrischen Versorgungsnetzes angeschlossenen Windenergieanlage gemäß Anspruch 1 vorgeschlagen.

Insbesondere wird ein Verfahren zum Betreiben einer an einem Netzanschlusspunkt eines elektrischen Versorgungsnetzes angeschlossenen Windenergieanlage vorgeschlagen, wobei das elektrische Versorgungsnetz eine Netzfrequenz aufweist und die Windenergieanlage, die einen elektrischen Generator mit einer Generatornennleistung umfasst, in Abhängigkeit der Netzfrequenz regelbar ist. Dieses Verfahren umfasst den Schritt, elektrische Leistung in thermische Leistung umzuwandeln, wobei die elektrische Leistung dem elektrischen Versorgungsnetz entnommen wird, um die Netzfrequenz des Versorgungsnetzes zu stützen, wenn die Netzfrequenz sich mit einem Frequenzgradienten ändert, der einen vorbestimmten Grenzwert überschreitet.

Bevorzugt erzeugt die Windenergieanlage mit einem elektrischen Generator eine elektrische Generatorleistung zum Einspeisen in das elektrische Versorgungsnetz. Diese elektrische Generatorleistung oder einen Teil davon speist dann die Windenergieanlage in Abhängigkeit der Netzfrequenz in das elektrische Versorgungsnetz als elektrische Einspeiseleistung ein.

Ändert sich nun die Netzfrequenz wird erfindungsgemäß vorgeschlagen, auf die Änderung der Netzfrequenz zweistufig zu reagieren, insbesondere mittels einer ersten und einer zweiten Stützstufe.

In der ersten Stützstufe wird die elektrische Generatorleistung in Abhängigkeit der Netzfrequenz reduziert, um die elektrische Einspeiseleistung entsprechend zu reduzieren. Die elektrische Einspeiseleistung wird somit in der ersten Stützstufe dadurch reduziert, dass die elektrische Generatorleistung entsprechend reduziert wird, bspw. durch eine Verstellung der Rotorblätter der Windenergieanlage oder ein Verändern des Erregerstromes des Generators. Dies führt dazu, dass der Generator weniger elektrische Leistung erzeugt bzw. weniger elektrische Leistung erzeugen kann. Die elektrische Einspeiseleistung wird also in der ersten Stützstufe über die elektrische Generatorleistung reduziert.

In der zweiten Stützstufe wird die elektrische Einspeiseleistung so verringert, dass die elektrische Einspeiseleistung kleiner ist als die elektrische Generatorleistung. Dies kann beispielsweise über einen sogenannten Leistungschopper erfolgen, der dazu eingerichtet ist, elektrische Energie in thermische Energie umzuwandeln. Der Leistungschopper ist dabei insbesondere dazu eingerichtet, große Leistungen, insbesondere die gesamte elektrische Einspeiseleistung der Windenergieanlage, zu wandeln. Bevorzugt entspricht der Leistungschopper dabei der Leistungsklasse des Generators.

Unter einem Verringern der elektrischen Einspeiseleistung ist also insbesondere eine gewollte, technische Leistungsverringerung zu verstehen, welche von üblicherweise auftretenden Verlusten klar zu unterscheiden ist.

Es werden somit zur Netzstützung wenigstens zwei Stützstufen vorgesehen. Jede Stützstufe kann auf ihre Weise zur Stützung des elektrischen Versorgungsnetzes beitragen. Dazu wird somit insbesondere vorgeschlagen, die elektrische Einspeiseleistung in der ersten Stützstufe über die elektrische Generatorleistung zu reduzieren und außerdem oder alternativ in der zweiten Stützstufe über eine Energiesenke zu verringern, wie beispielsweise einen Leistungschopper. Der Leistungschopper ist somit insbesondere dazu eingerichtet, die elektrische Einspeiseleistung der Windenergieanlage direkt zu reduzieren.

Das Verfahren ermöglicht somit eine besonders schnelle Leistungsreduzierung der elektrischen Einspeiseleistung einer Windenergieanlage. Insbesondere schafft das vorgeschlagene Verfahren somit eine Möglichkeit, die elektrische Einspeiseleistung innerhalb von weniger als 0,4 Sekunden vollständig abzusenken, sodass die Windenergieanlage, insbesondere bei entsprechendem Bedarf, in kürzester Zeit, bevorzugt innerhalb einer Sekunde, keine Leistung mehr in das Versorgungsnetz einspeist.

Vorzugsweise wird gemäß bzw. in der zweiten Stützstufe die elektrische Einspeiseleistung verringert, wenn sich die Netzfrequenz mit einem Frequenzgradienten ändert, der einen vorbestimmten Grenzgradienten überschreitet.

Die zweite Stützstufe wird demnach aktiviert, wenn das elektrische Versorgungsnetz einen Frequenzgradienten aufweist, der größer ist als ein vorbestimmter Grenzgradient. Überschreitet beispielsweise der Frequenzgradient des elektrischen Versorgungsnetzes den vorbestimmten Grenzgradienten wird der Leistungschopper aktiviert, um die elektrische Einspeiseleistung der Windenergieanlage zu verringern.

Besonders vorteilhaft hierbei ist, dass ein solches Vorgehen deutlich kleinere Zeitkonstanten aufweist, als eine Verstellung der Azimutausrichtung der Windenergieanlage oder eine Verstellung der Rotorblätter. Es wird also in dieser zweiten Stützstufe deutlich schneller die Leistung reduziert als in der ersten Stützstufe. Es wurde erkannt, dass eine solche schnelle Reduzierung aber nicht in jeder Situation notwendig ist. Um auch schnell festzustellen, ob eine solche schnelle Reduzierung notwendig oder wünschenswert ist, wird hier vorgeschlagen, eine Änderung der Netzfrequenz anhand ihres Frequenzgradienten zu bewerten. Liegt ihr Frequenzgradient unter dem Grenzgradienten, kann bspw. eine Stützung in der ersten Stützstufe ausreichen, bei der die Generatorleistung reduziert wird.

Vorzugsweise wird der vorbestimmte Grenzgradient dabei entsprechend dem Netzanschlusspunkt der Windenergieanlage gewählt, als vorteilhaft hat sich ein vorbestimmter Grenzgradient von wenigstens 0,4 Hz pro Sekunde, insbesondere von 0,5 Hz pro Sekunde erwiesen.

Der Netzfrequenzgradient selbst kann dabei durch Messung der Netzfrequenz über der Zeit ermittelt werden. Dies kann lokal durch die Windenergieanlage bzw. den die Windenergieanlage aufweisenden Windpark, bevorzugt durch die Windparksteuereinheit, oder durch den Versorgungsnetzbetreiber erfolgen, der den erfassten Frequenzgradienten an den Windpark bzw. die Windenergieanlage übermittelt. Alternativ kann der Versorgungsnetzbetreiber in Abhängigkeit des erfassten Frequenzgradienten auch Soll-Werte für den Windpark bzw. die Windenergieanlage übermitteln.

Vorzugsweise wird gemäß bzw. in der zweiten Stützstufe die elektrische Einspeiseleistung verringert, wenn die Netzfrequenz oberhalb eines vorbestimmten Frequenzwertes liegt.

Die zweite Stützstufe wird somit vorzugsweise aktiviert, wenn die Netzfrequenz oberhalb eines vorbestimmten Frequenzwertes liegt. Der vorbestimmte Frequenzwert ist dabei größer als die Netznennfrequenz, beispielsweise beträgt der vorbestimmte Frequenzwert 50,2 Hz bei einer Netznennfrequenz von 50 Hz.

Die zweite Stützstufe weist dann ein Frequenztotband auf, in der die zweite Stützstufe zunächst nicht ausgelöst wird.

Dass die elektrische Einspeiseleistung gemäß der zweiten Stützstufe verringert wird, wenn die Netzfrequenz oberhalb eines vorbestimmten Frequenzwertes liegt, kann außerdem oder alternativ dazu erfolgen, ob der Frequenzgradient oberhalb des Grenzgradienten liegt.

Im Falle, dass für das Anwenden der zweiten Stützstufe sowohl ein Grenzgradient als auch ein absoluter Frequenzwert geprüft wird, kann vorgesehen sein, dass die zweite Stützstufe aktiviert wird, wenn nur eines der beiden Kriterien erfüllt wird, oder wenn beide Kriterien erfüllt werden. Es kann auch ein weiteres Kriterium, wie bspw. weitere Grenzwerte, vorgesehen sein, um beide Kriterien zusammen zu berücksichtigen.

Bei einer Kombination beider Kriterien kann vorgesehen sein, dass nur außerhalb des Frequenztotbandes geprüft wird, ob der Frequenzgradient der Netzfrequenz den vorbestimmten Grenzgradienten überschreitet. Sofern dann sowohl die Netzfrequenz oberhalb eines vorbestimmten Frequenzwertes liegt und die Netzfrequenz sich mit einem Frequenzgradienten ändert, der einen vorbestimmten Grenzwert überschreitet, wird die elektrische Einspeiseleistung verringert, insbesondere die zweite Stützstufe ausgelöst bzw. aktiviert.

Der vorbestimmte Frequenzwert liegt vorzugsweise im Bereich von 0,1% bis 1%, der Netznennfrequenz, insbesondere im Bereich von 0,2% bis 0,5% und der bevorzugte Wert des Grenzwertes liegt bei 0,4% der Netznennfrequenz.

Vorzugsweise wird gemäß bzw. in der zweiten Stützstufe die elektrische Einspeiseleistung verringert, wenn die elektrische Einspeiseleistung für einen vorbestimmten Zeitraum und/oder wenigstens um einen vorbestimmten Überschreitungswert oberhalb einer Soll-Leistung liegt, insbesondere oberhalb einer Soll-Leistung die kleiner ist als die vom Generator erzeugte elektrische Generatorleistung.

Die zweite Stützstufe wird somit besonders bevorzugt auch dann aktiviert bzw. die elektrische Einspeiseleistung wird auch dann verringert, wenn die elektrische Einspeiseleistung für einen vorbestimmten Zeitraum oberhalb einer bestimmten Soll-Leistung liegt. Dies ist beispielsweise dann der Fall, wenn die elektrische Einspeiseleistung mit einem Gradienten reduziert werden muss, den der elektrische Generator aus technischen Gründen nicht erfüllen soll oder nicht erfüllen kann, bspw. weil die Gondel nicht schnell genug aus dem Wind gedreht und somit der Ertrag der Windenergieanlage zu hoch ist. Die Soll-Leistung wird dann entsprechend den Anforderungen schnell reduziert, bspw. als Ergebnis einer Regelung oder durch eine andere Vorgabe, aber die tatsächliche Reduzierung, also die Ist-Leistung, kommt nicht so schnell hinterher. Hierfür wird die Verwendung der zweiten Stützstufe vorgeschlagen. In einem solchen Fall wird dann die elektrische Einspeiseleistung unter die in dem Moment erzeugte Generatorleistung verringert, insbesondere mittels eines Leistungschoppers.

Besonders vorteilhaft hierbei ist, dass die Windenergieanlage nicht unnötig hohen mechanischen Belastungen ausgeliefert werden muss, um etwaige Leistungs-Sollwerte zu erreichen, insbesondere ermöglicht eine solche Ausführung eine besonders schonende Fahrweise der Anlage, insbesondere für den Antriebsstrang der Windenergieanlage.

Vorzugsweise wird gemäß bzw. in der zweiten Stützstufe die elektrische Einspeiseleistung verringert, wenn die zweite Stützstufe angefordert wird, insbesondere durch einen Betreiber des elektrischen Versorgungsnetzes oder durch eine Leitwarte.

Hierdurch wird beispielsweise ermöglicht, dass die Windenergieanlage, selbst wenn sie keine elektrische Energie in das elektrische Versorgungsnetz einspeist, durch den Versorgungsnetzbetreiber als Energiesenke bzw. als Verbraucher, insbesondere von Wirkleistung, betrieben werden kann. Vorzugsweise kann hierfür ein Steuereingang für ein solches externes Anforderungssignal vorgesehen sein.

Das Verfahren ermöglicht somit einen netzstützenden Effekt für Windenergieanlagen, selbst wenn der Generator der Windenergieanlage keine elektrische Generatorleistung zum Einspeisen in das elektrische Versorgungsnetz erzeugt. Dies wirkt sich besonders vorteilhaft auf das elektrische Versorgungsnetz aus.

Vorzugsweise wird die zweite Stützstufe erst nach einem Durchlaufen der ersten Stützstufe ausgeführt.

Die zweite Stützstufe wird somit bevorzugt erst aktiviert, nachdem die elektrische Generatorleistung in Abhängigkeit der Netzfrequenz reduziert wurde. Erst wenn ein Reduzieren der elektrischen Generatorleistung nicht mehr ausreicht, um eine entsprechende elektrische Einspeiseleistung bereitzustellen, wird die elektrische Einspeiseleistung zusätzlich beispielsweise mittels eines Leistungschoppers verringert.

Alternativ wird die zweite Stützstufe unabhängig von der ersten Stützstufe ausgeführt.

Besonders vorteilhaft hierbei ist, dass das Verfahren zwei Regelstränge aufweist, die in Abhängigkeit zweier unterschiedlicher Größen die elektrische Einspeiseleistung einer Windenergieanlage regeln, nämlich in Abhängigkeit der Netzfrequenzabweichung und des Netzfrequenzgradienten. Es werden somit eine schnelle und eine langsame Regelschleife bereitgestellt bzw. ermöglicht.

Ändert sich beispielsweise die Netzfrequenz, ausgehend von 50 Hz, mit einem Frequenzgradienten, der beispielsweise größer als 0,5 Hz pro Sekunde ist, wird bevorzugt die elektrische Einspeiseleistung mittels eines Leistungschoppers verringert. Übersteigt nun, trotz dieser Maßnahme, die Netzfrequenz eine vorbestimmte Soll-Frequenz, beispielsweise, von 50,2 Hz, wird zusätzlich die elektrische Generatorleistung reduziert, beispielsweise über die Erregung des Generators. Das Reduzieren der elektrischen Generatorleistung, also die erste Stützstufe, wird somit zusätzlich zum Verringern der elektrischen Einspeiseleistung, also der zweiten Stützstufe, ausgeführt, insbesondere bei Bedarf ausgeführt.

Vorzugsweise erfolgt das Erzeugen der elektrischen Generatorleistung zum Einspeisen in das elektrische Versorgungsnetz mit dem elektrischen Generator in Abhängigkeit der Netzfrequenz, insbesondere in Abhängigkeit einer Abweichung der Netzfrequenz von der Netznennfrequenz, wobei die elektrische Generatorleistung reduziert wird, wenn die Netzfrequenz oberhalb einer vorbestimmten Soll-Frequenz liegt.

Der Generator wird somit bevorzugt in Abhängigkeit der Netzfrequenz geregelt. Bei Überschreiten der Netzfrequenz oberhalb einer bestimmten Soll-Frequenz, beispielsweise 50 Hz oder 50,2 Hz, wird die elektrische Generatorleistung somit so reduziert, dass auch die elektrische Einspeiseleistung reduziert wird. Ändert sich hingegen oder zudem die Netzfrequenz mit einem Frequenzgradienten, der beispielsweise größer ist als 0,5 Hz pro Sekunde, wird die Einspeiseleistung bevorzugt unabhängig der elektrischen Generatorleistung verringert. Das Verringern der elektrischen Einspeiseleistung kann dabei durch ein Umwandeln von elektrischer Generatorleistung in thermische Leistung mittels eines Leistungschoppers erfolgen. Besonders bevorzugt wird das Verringern der elektrischen Einspeiseleistung somit von einer Reduzierung der elektrischen Einspeiseleistung durch eine Reduzierung der elektrischen Generatorleistung ausgeführt. Bevorzugt wird der Generator hierfür in Abhängigkeit einer anderen Größe gesteuert, insbesondere über die Abweichung der Netzfrequenz von der Netznennfrequenz, der elektrische Generator wird somit nicht oder nicht nur in Abhängigkeit des Frequenzgradienten gesteuert. Der Frequenzgradient kann ein Auslöser einer frequenzabhängigen Steuerung sein.

Vorzugsweise erfolgt das Verringern der elektrischen Einspeiseleistung so, dass die elektrische Einspeiseleistung gleich Null ist.

Die Windenergieanlage ist somit dazu eingerichtet, beispielsweise mittels Leistungsvernichtung und/oder Leistungsableitung ihre elektrische Einspeiseleistung innerhalb kürzester Zeit von Nennleistung auf 0 Leistung abzusenken. Der Leistungschopper der Windenergieanlage weist hierfür eine entsprechende Leistungsklasse auf, die sich deutlich von üblichen Bremschoppern oder Crowbars unterscheidet, insbesondere in Hinsicht auf die maximal aufnehmbare elektrische Leistung, die Betriebsdauer und zulässige Leistungsgradienten.

Vorzugsweise wird elektrische Leistung aus dem elektrischen Versorgungsnetz entnommen, insbesondere wenn die Netzfrequenz sich mit einem Frequenzgradienten ändert, der einen vorbestimmten Grenzwert überschreitet und/oder die Netzfrequenz oberhalb einer bzw. der vorbestimmten Soll-Frequenz liegt.

Durch die Steuerung der elektrischen Generatorleistung in Abhängigkeit einer Frequenzabweichung und die Steuerung der elektrischen Einspeiseleistung in Abhängigkeit eines Frequenzgradienten wird ermöglicht, dass die Windenergieanlage auch elektrische Leistung, insbesondere Wirkleistung aus dem elektrischen Versorgungsnetz aufnehmen kann, um das elektrische Versorgungsnetz zu stützen bzw. einen Beitrag zur Frequenzstützung zu liefern, der größer ist als die Anlagen- bzw. Generatornennleistung oder zumindest größer als die aktuelle Generatorleistung.

In einer bevorzugten Ausführung ist die Windenergieanlage dazu eingerichtet, elektrische Blindleistung in das elektrische Versorgungsnetz einzuspeisen und elektrische Wirkleistung aus dem elektrischen Versorgungsnetz zu beziehen. Beispielsweise ist hierfür bei einer Windenergieanlage mit Vollumrichterkonzept der Leistungschopper im Gleichspannungszwischenkreis des Vollumrichters angeordnet und der Wechselrichter des Vollumrichters bidirektional ausgeführt, um Wirkleistung aus dem elektrischen Versorgungsnetz zu entnehmen und mit dem Leistungschopper in thermische Leistung umzuwandeln, während die Windenergieanlage weiterhin Blindleistung in das elektrische Versorgungsnetz einspeist.

Es wird somit zumindest ein 2-Quadrantenbetrieb ermöglicht, nämlich Blindleistung einspeisen und Wirkleistung entnehmen. Ferner kann das Verfahren auf bereits existierende Windenergieanlagemodelle angewendet werden. Bevorzugt erfolgt das Entnehmen elektrischer Leistung, insbesondere Wirkleistung, aus dem elektrischen Versorgungsnetz in Abhängigkeit eines Frequenzgradienten und/oder in Abhängigkeit einer Frequenzabweichung.

Bevorzugt wird vorgeschlagen, dass der vorbestimmte Grenzwert des Frequenzgradienten 0,5 Hz pro Sekunde beträgt. Demnach wird die elektrische Einspeiseleistung erst dann verringert, wenn die Netzfrequenz sich mit einem Frequenzgradienten ändert, der größer ist als 0,5 Hz pro Sekunde. Unterhalb des bevorzugten Grenzwertes von 0,5 Hz pro Sekunde wird die eingespeiste Leistung somit ausschließlich über die elektrische Generatorleistung eingestellt. Die elektrische Einspeisleistung wird somit unterhalb des bevorzugten Grenzwertes von 0,5 Hz pro Sekunde im Wesentlichen vollständig durch die elektrische Generatorleistung bestimmt. D.h. die vom Generator erzeugte elektrische Leistung wird in das elektrische Versorgungsnetz abzüglich etwaiger Verluste und dem Eigenbedarf der Windenergieanlage vollständig eingespeist. Wird der vorbestimmte Grenzwert von 0,5 Hz pro Sekunde überschritten, wird die elektrische Einspeiseleistung zusätzlich verringert, beispielsweise indem elektrische Generatorleistung in thermische Leistung umgesetzt wird.

Das Verfahren schafft somit eine Möglichkeit die eingespeiste elektrische Leistung auf eine Weise zu reduzieren, besonders mit einer Geschwindigkeit zu reduzieren, die üblicherweise nicht mit einer einfachen Rotorblattverstellung erreicht werden kann. Zudem ist das Verfahren besonders schonend für den Generator der Windenergieanlage, da seine Erregung zur schnellen Leistungsreduktion nicht schlagartig geändert werden muss, sondern kann mit hohen Zeitkonstanten nachgeführt werden.

Der vorbestimmte Grenzwert kann in Abhängigkeit der Netztopologie oder bei Bedarf, insbesondere durch den Netzbetreiber, auch zwischen 0,5 Hz pro Sekunde und 2 Hz pro Sekunde sein, beispielsweise 0,6 Hz pro Sekunde oder 1,2 Hz pro Sekunde. Dies ist insbesondere für schwache elektrische Versorgungsnetze vorteilhaft, also bei solchen, die ohnehin auf Grund ihrer Topologie eine hohe Frequenzvarianz aufweisen, die auch zugelassen ist.

Vorzugsweise wird die elektrische Einspeiseleistung so verringert, dass die elektrische Einspeiseleistung gleich der elektrischen Generatorleistung ist, wenn die Netzfrequenz sich mit einem Frequenzgradienten ändert, der den vorbestimmten Grenzwert unterschreitet, insbesondere wieder unterschreitet. Die Einspeiseleistung wird gemäß dieser Ausführungsform also nur bei einem hohen Frequenzgradienten unter die Generatorleistung verringert.

Sofern sich also das elektrische Versorgungsnetz wieder erholt, d.h. sich der Frequenzgradient der Netzfrequenz wieder normalisiert, also kleiner wird und den vorbestimmten Grenzwert wieder unterschreitet, wird bevorzugt das Verringern der Einspeiseleistung eingestellt. Es wird also keine elektrische Generatorleistung mehr in thermische Leistung umgewandelt, wenn der Frequenzgradient der Netzfrequenz den vorbestimmten Grenzwert wieder unterschreitet.

Gemäß einer bevorzugten Ausführungsform wurde ferner erkannt, dass eine Höchstgrenze des vorbestimmten Gradienten von 2 Hz pro Sekunde besonders vorteilhaft ist, da das Verfahren auch als Alternative zu einer vollständigen Abschaltung der Windenergieanlage verwendet werden kann.

Das Verfahren kann somit auch anstatt einer Abschaltung der Windenergieanlage verwendet werden, wie sie ansonsten beispielsweise bei 2 Hz pro Sekunde eingeleitet werden sollte.

Vorzugsweise umfasst das Verringern der elektrischen Einspeiseleistung ein Verbrauchen elektrischer Leistung, insbesondere ein Verbrauchen des zumindest einen Teils der elektrischen Generatorleistung, welches zumindest teilweise mittels eines Schaltgerätes zum Umwandeln elektrischer Leistung in thermische Leistung erfolgt.

Das Verringern der elektrischen Einspeiseleistung erfolgt somit durch ein Verbrauchen der elektrischen Generatorleistung bzw. eines Teils davon. Das Verbrauchen der elektrischen Generatorleistung erfolgt dabei mittels eines Schaltgerätes, welches elektrische Leistung in thermische Leistung umwandelt, beispielsweise über eine leistungsstarke Widerstandsschaltung oder über einen großen Chopper, insbesondere einen Leistungschopper. Die Windenergieanlage bzw. die Widerstandsschaltung oder der Chopper sind dabei so ausgelegt, dass sie eine entsprechend große elektrische Leistung in thermische Leistung umwandeln, um die eingespeiste elektrische Leistung unabhängig von der elektrischen Generatorleistung zu verringern.

Bevorzugt ist das Schaltgerät zum Umwandeln elektrischer Leistung in thermische Leistung dazu eingerichtet, wenigstens 3 Sekunden lang, insbesondere wenigstens 5 Sekunden lang, elektrische Leistung, die der Generatornennleistung entspricht, in thermische Leistung umzuwandeln.

Das Schaltgerät ist somit wenigstens dazu eingerichtet, die vollständige Generatorleistung für wenigstens 3 Sekunden in thermische Leistung so umzuwandeln, dass die eingespeiste elektrische Leistung auf Null verringert wird. Die Windenergieanlage ist somit dazu eingerichtet, wenigstens für 3 Sekunden keine elektrische Leistung in das elektrische Versorgungsnetz einzuspeisen, obwohl der Generator mit Nennleistung betrieben wird und eine elektrische Generatorleistung erzeugt, die der Generatornennleistung entspricht.

Besonders bevorzugt ist das Schaltgerät zum Umwandeln elektrischer Leistung in thermische Leistung dazu eingerichtet, wenigstens 3 Sekunden lang, insbesondere wenigstens 5 Sekunden lang, elektrische Leistung, die einer doppelten Generatornennleistung entspricht, in thermische Leistung umzuwandeln.

In einer besonders bevorzugten Ausführung ist das Schaltgerät dazu eingerichtet, die doppelte Generatornennleistung für wenigstens drei Sekunden, bevorzugt fünf Sekunden, aufzunehmen bzw. in Wärme umzuwandeln. Die Windenergieanlage ist somit dazu eingerichtet, wenigstens für drei Sekunden keine elektrische Leistung in das elektrische Versorgungsnetz einzuspeisen, obwohl der Generator mit Nennleistung betrieben wird und eine elektrische Generatorleistung erzeugt, die der Generatornennleistung entspricht und kann zusätzlich dem elektrischen Versorgungsnetz eine elektrische Leistung, insbesondere Wirkleistung, entnehmen, die der Generatorleistung entspricht.

Das Schaltgerät zum Umwandeln elektrischer Leistung in thermische Leistung umfasst somit wenigstens einen Chopper bzw. ist als Chopper oder Widerstandschaltung ausgebildet und bevorzugt im Gleichspannungszwischenkreis eines Wechselrichters der Windenergieanlage, insbesondere im Gleichspannungszwischenkreis des Vollumrichters der Windenergieanlage, angeordnet.

Das Schaltgerät weist somit eine entsprechende Größe auf, insbesondere besteht das Schaltgerät aus einer Vielzahl von Choppern, die parallel zu einander angeordnet sind, um möglichst viel elektrische Leistung über einen langen Zeitraum in thermische Leistung, insbesondere Wärme, umzuwandeln. Mehrere oder eine Vielzahl an Choppern können aber auch als ein Chopper oder eine Chopperbank bezeichnet werden.

Das Verfahren ermöglicht es somit elektrische Leistung, insbesondere Wirkleistung, aus dem elektrischen Versorgungsnetz aufzunehmen, selbst wenn die Windenergieanlage selbst nicht einspeist. Die Windenergieanlage wird dann ausschließlich als Verbraucher betrieben, wobei die Verbrauchereigenschaft der Windenergieanlage mittels eines vorstehend oder nachstehend beschrieben Schaltgerätes ermöglicht wird. Zudem ist die Windenergieanlage dazu eingerichtet, bei Bedarf als elektrischer Verbraucher, insbesondere Großverbraucher mit über einem 1 MW Nennleistung, zu arbeiten.

Erfindungsgemäß wird zudem eine Windenergieanlage umfassend einen Generator mit einer Generatornennleistung zum Erzeugen einer elektrischen Generatorleistung vorgeschlagen, wobei die Windenergieanlage dazu vorbereitet ist, an einen Netzanschlusspunkt eines elektrischen Versorgungsnetzes angeschlossen zu werden, um die elektrische Generatorleistung oder einen Teil davon in das elektrische Versorgungsnetz als elektrische Einspeiseleistung in Abhängigkeit einer Netzfrequenz des elektrischen Versorgungsnetzes einzuspeisen und wobei die Windenergieanlage dazu eingerichtet ist, ein vorstehend oder nachstehend beschriebenes Verfahren durchzuführen.

Besonders ist die Windenergieanlage dazu eingerichtet, dass in einer ersten Stützstufe die elektrische Generatorleistung in Abhängigkeit der Netzfrequenz reduziert wird, um die die elektrische Einspeiseleistung entsprechend zu reduzieren, und in einer zweiten Stützstufe die elektrische Einspeiseleistung so verringert wird, dass die elektrische Einspeiseleistung kleiner ist als die elektrische Generatorleistung. Dazu weist die Windenergieanlage vorzugsweise eine entsprechende Einspeisesteuereinheit auf, die sowohl den Generator steuern kann oder zumindest eine Steuerung des Generators auslösen kann, als auch eine Steuerung der zweiten Stützstufe durchführen kann. Zur Steuerung der zweiten Stützstufe ist die Einspeisesteuereinheit besonders mit einer Einrichtung zum Verbrauchen elektrischer Energie verbunden, um diese Einrichtung so anzusteuern, dass sie zur Ausführung der zweiten Stützstufe Energie verbraucht.

Vorzugsweise umfasst die Windenergieanlage ein Schaltgerät zum Umwandeln elektrischer Leistung in thermische Leistung, wobei das Schaltgerät dazu eingerichtet ist, zumindest einen Teil der elektrischen Generatorleistung zu verbrauchen, um die elektrische Einspeiseleistung zu verringern. Besonders ist das Schaltgerät mit der Einspeisesteuereinheit verbunden, so dass die Einspeisesteuereinheit das Schaltgerät ansteuern kann, um dadurch das Umwandeln elektrischer Leistung in thermische Leistung zu veranlassen.

Bevorzugt ist das Schaltgerät zum Umwandeln elektrischer Leistung in thermische Leistung dazu eingerichtet, wenigstens 3 Sekunden lang, insbesondere wenigstens 5 Sekunden lang, elektrische Leistung, die einer, bevorzugt doppelten, Generatornennleistung entspricht, in thermische Leistung umzuwandeln.

Besonders bevorzugt ist das Schaltgerät als Chopperbank bzw. Leistungschopperbank ausgebildet und/oder umfasst einen Gleichrichter.

Der Leistungschopper bzw. die Leistungschopperbank kann somit sowohl im Gleichspannungszwischenkreis als auch am Wechselrichterausgang der Windenergieanlage angeordnet werden, um elektrische Generatorleistung in thermische Leistung umzuwandeln, um die elektrische Einspeiseleistung der Windenergieanlage zu verringern. Bevorzugt weist die Chopperbank am Eingang einen Diodengleichrichter auf, der dazu eingerichtet ist, am Ausgang eines Wechselrichters der Windenergieanlage die elektrische Generatorleistung aufzunehmen.

Erfindungsgemäß wird ferner ein Windpark vorgeschlagen, der wenigstens eine vorstehend oder nachstehend beschriebene Windenergieanlage umfasst, wobei der Windpark eine Windparksteuereinheit aufweist, die dazu eingerichtet ist, Steuersignale an die Windenergieanlagen des Windparks zu senden und von den Windenergieanlagen des Windparks bereitgestellte Statussignale zu empfangen, um eine negative elektrische Windparkleistung oder -energie zu ermitteln.

Der Windpark weist somit eine Parksteuereinheit auf, die dazu eingerichtet ist, die möglichen negativen Leistungen oder Energien der einzelnen Windenergieanlagen des Windparks zu ermitteln, die durch die erfindungsgemäßen Windenergieanlagen bereitgestellt werden, insbesondere durch deren Schaltgeräte, die dazu eingerichtet sind, ein vorstehend oder nachstehend beschriebenes Verfahren auszuführen. Negative Leistung bzw. Energie ist dabei solche, um die die derzeit eingespeiste Leistung bzw. Energie verringert werden kann. Hierdurch kann besonders eine Reduktion der eingespeisten Leistung geplant oder zumindest ermittelt werden. Da auch eine Berücksichtigung der Zeit, über die die Reduktion vorgenommen werden kann oder soll, wichtig ist, wird vorzugsweise eine Betrachtung der Energie vorgeschlagen.

Erfindungsgemäß wird zudem ein Verfahren zum Steuern eines vorstehend oder nachstehen beschriebenen Windparks vorgeschlagen, umfassend die Schritte: Abfragen von Statussignalen der Windenergieanlagen, insbesondere der Energieaufnahmebereitschaft der Schaltgeräte der Windenergieanlagen, Ermitteln einer negativen elektrischen Windparkleistung oder -energie auf Basis der abgefragten Statussignale der Windenergieanlagen und Bereitstellen der Ermittelten negativen elektrischen Windparkleistung oder - energie an einen Versorgungsnetzbetreiber und/oder eine den Windpark steuernde Leitwarte.

Die ermittelten negativen Leistungen bzw. Energien der einzelnen Windenergieanlagen, die durch die Schaltgeräte der Windenergieanlagen bereitgestellt werden, werden zu einer negativen elektrischen Windparkleistung bzw. -energie zusammengerechnet, und beispielsweise dem Versorgungsnetzbetreiber als Information bereitgestellt. Der Versorgungsnetzbetreiber kann dann bei Bedarf diese so bereitgestellte negative Windparkleistung bzw. -energie abrufen, um das elektrische Versorgungsnetz zu stützen. Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer bevorzugten Windenergieanlage.
- Fig. 2: zeigt einen schematischen Aufbau eines elektrischen Stranges einer Windenergieanlage zum Erzeugen und Einspeisen einer elektrischen Energie gemäß einer Ausführungsform.
- Fig. 3: zeigt schematisch einen Ablauf des erfindungsgemäßen Verfahrens zum Betreiben einer Windenergieanlage in einer bevorzugten Ausführungsform.
- Fig. 4: zeigt schematisch eine Überfrequenz-Leistungsaufnahme mit einer Windenergieanlage gemäß einer Ausführungsform.
- Fig. 5: zeigt einen schematischen Aufbau eines Windparks zum Erzeugen und Einspeisen einer elektrischen Energie gemäß einer Ausführungsform.

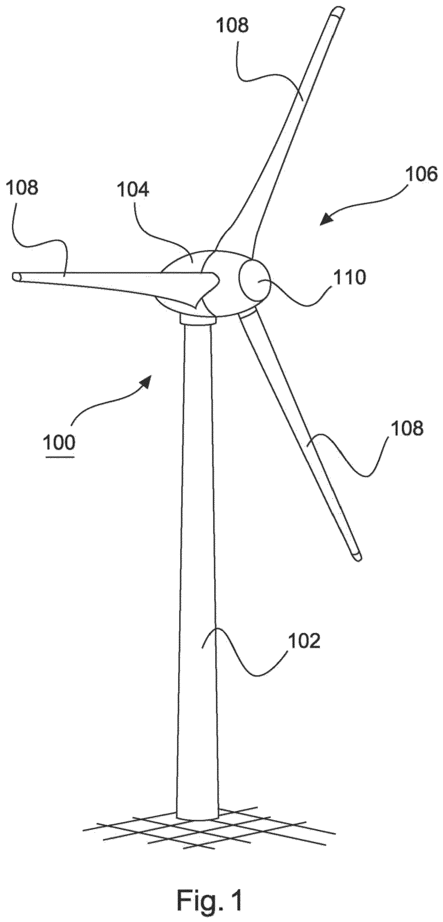

Fig. 1 zeigt eine Windenergieanlage 100 zum Erzeugen und Einspeisen elektrischer Energie in ein elektrisches Versorgungsnetz.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und triebt dadurch einen elektrischen Generator in der Gondel 104 an, wobei der Generator bevorzugt als 6-phasiger Ringgenerator ausgebildet ist.

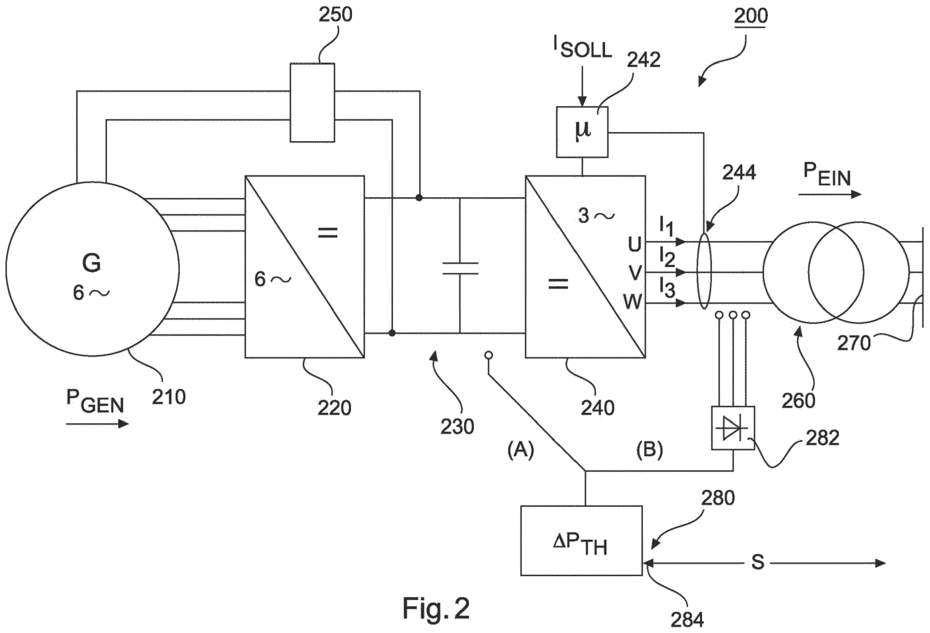

Fig. 2 zeigt vereinfacht einen elektrischen Strang 200 einer in Fig. 1 gezeigten Windenergieanlage.

Der elektrische Strang 200 weist einen 6-phasigen Ringgenerator 210 mit einer Generatornennleistung zum Erzeugen einer elektrischen Generatorleistung P_{GEN} auf, der durch den Wind über einen mechanischen Antriebsstrang der Windenergieanlage in Drehbewegung versetzt wird, um einen 6-phasigen elektrischen Wechselstrom zu erzeugen. Der 6-phasige Wechselstrom wird vom elektrischen Generator 210 an den Gleichrichter 220 übergeben, der über einen Gleichspannungszwischenkreis 230 mit dem 3-phasigen Wechselrichter 240 verschaltet ist. Der 6-phasige Ringgenerator 210, der als Synchrongenerator ausgebildet ist, wird dabei über eine Erregung 250 aus dem Gleichspannungszwischenkreis 230 gesteuert, wobei die Erregung auch aus einer anderen Quelle, besonders durch einen separaten Stromsteller versorgt werden kann.

Der elektrische Strang 200 weist somit ein Vollumrichter-Konzept auf, bei dem mittels des 3-phasigen Wechselrichters 240 über den Windenergieanlagentransformator 260 die elektrische Einspeiseleistung P_{EIN} in das Netz 270 eingespeist wird. Üblicherweise handelt es sich bei diesem Netz 270 um ein Windparknetz, welches über einen Windparktransformator in ein elektrisches Versorgungsnetz einspeist.

Zum Erzeugen des dreiphasigen Stromes I₁, I₂, I₃ für jede der Phasen U, V, W wird der Wechselrichter 240 mit einem Toleranzbandverfahren gesteuert. Die Steuerung erfolgt dabei über den Controller 242, der mittels einer Stromerfassung 244 jeden der drei durch den Wechselrichter 240 erzeugten Ströme I₁, I₂, I₃ erfasst. Der Controller 242 ist somit dazu eingerichtet, mittels der Stromerfassung 244 jede Phase des Wechselrichters 240 einzeln zu steuern. Hierzu kann dem Controller 242 ein Strom-Sollwert I_{SOLL} vorgegeben werden, in Abhängigkeit dessen die Ströme I₁, I₂, I₃ eingestellt werden. Der Strom-Sollwert I_{SOLL} wird bevorzugt anlagenintern für jede Phase U, V, W einzeln berechnet und für den Controller 242 vorgegeben.

Der elektrische Strang 200 weist ferner ein Schaltgerät 280 zum Umwandeln elektrischer Leistung in thermische Leistung auf, welches dazu eingerichtet ist, wenigstens 5 Sekunden lang, elektrische Leistung, die der doppelten Generatornennleistung entspricht, in thermische Leistung ΔP_{TH} umzuwandeln.

Das Schaltgerät 280 kann entweder (A) mit Gleichspannungszwischenkreis 230 oder (B) mit den Phasen U, V, W zwischen dem Wechselrichter 240 und dem Windenergieanlagentransformator 260 über einen Diodengleichrichter 282 verschaltet sein, um die elektrischen Einspeiseleistung P_{EIN} so zu verringern, dass die elektrische Einspeiseleistung P_{EIN} kleiner ist als die elektrische Generatorleistung P_{GEN}, wenn die Netzfrequenz sich mit einem Frequenzgradienten ändert, der einen vorbestimmten Grenzwert überschreitet. Das Schaltgerät 280 ist somit dazu eingerichtet große Leistungen umzusetzen.

Zum Verringern der elektrischen Einspeiseleistung P_{EIN} weist das Schaltgerät 280 einen Steuereingang 284 auf, um Steuersignale S der Windenergieanlagensteuerung oder der Windparksteuerung zu empfangen bzw. weitere Signale an die Steuerungen zu übergeben bzw. zurück zu geben.

Ändert sich beispielsweise die Netzfrequenz mit einem Frequenzgradienten, der einen vorbestimmten Grenzwert überschreitet, wird das Schaltgerät 280 aktiviert, um die Einspeiseleistung P_{EIN} zu verringern. Es wird also die vom Generator 210 erzeugte elektrische Generatorleistung P_{GEN} mittels des Schaltgerätes 280 so reduziert, dass sich die Einspeiseleistung P_{EIN} verringert Es handelt sich somit bei dem Schaltgerät 280 um eine Vorrichtung zum Umsetzen hoher elektrischer Leistungen in thermische Leistung. Bevorzugt ist das Schaltgerät hierzu als Chopperbank zum Umsetzen großer Leistungen und Energien ausgebildet. Das Schaltgerät 280 wird zudem in Abhängigkeit der Netzfrequenz gesteuert, insbesondere in Abhängigkeit eines Frequenzgradienten.

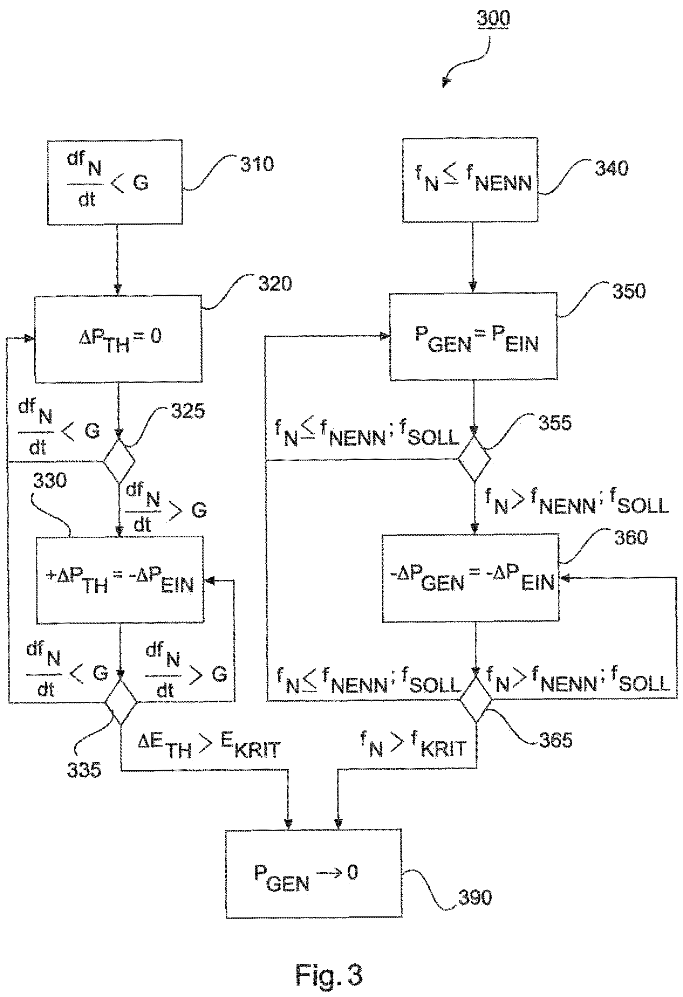

Fig. 3 zeigt schematisch einen Ablauf 300 des erfindungsgemäßen Verfahrens zum Betreiben einer Windenergieanlage in einer bevorzugten Ausführungsform. Das Verfahren betrifft insbesondere das Verringern der elektrischen Einspeiseleistung so, dass die elektrische Einspeiseleistung kleiner ist als die elektrische Generatorleistung, wenn die Netzfrequenz sich mit einem Frequenzgradienten ändert, der einen vorbestimmten Grenzwert überschreitet.

Der Generator der Windenergieanlage erzeugt hierfür eine elektrische Generatorleistung zum Einspeisen in das elektrische Versorgungsnetz, während das Versorgungsnetz in einem stabilen Zustand ist. Dies bedeutet insbesondere, dass die Netzfrequenz f_{N} im Wesentlichen der Netznennfrequenz f_{NENN} entspricht und der Frequenzgradient der Netzfrequenz df_{N}/dt kleiner ist als der vorbestimmte Grenzwert G. Dass der Frequenzgradient der Netzfrequenz df_{N}/dt kleiner ist als der vorbestimmte Grenzwert G des Frequenzgradienten, ist durch den Block 310 bzw. dass die Netzfrequenz f_{N} im Wesentlichen der Netznennfrequenz f_{NENN} entspricht, ist durch den Block 340 angedeutet.

Sofern der Frequenzgradient der Netzfrequenz df_{N}/dt kleiner ist als der vorbestimmte Grenzwert G, wandelt das Schaltgerät zum Umwandeln elektrischer Leistung in thermischer Leistung keine thermische Leistung ΔP_{TH} um. Dies ist durch den Block 320 angedeutet.

Die Überprüfung, ob der Frequenzgradient der Netzfrequenz df_{N}/dt kleiner ist als der vorbestimmte Grenzwert G wird dynamisch durchgeführt, beispielsweise durch eine Erfassung der Netzfrequenz f_{N} und anschließende Mittelung der dynamisch erfassten Netzfrequenz f_{N} über der Zeit t. Dass dynamische Erfassen des Frequenzgradienten der Netzfrequenz df_{N}/dt ist durch den Block 325 angedeutet.

Sofern der Frequenzgradient der Netzfrequenz df_{N}/dt kleiner ist als der vorbestimmte Grenzwert G wandelt das Schaltgerät weiterhin keine thermische Leistung P_{TH} um.

Übersteigt der Frequenzgradient der Netzfrequenz df_{N}/dt aber den vorbestimmten Grenzwert G wandelt das Schaltgerät elektrische Leistung, insbesondere einen Teil der elektrischen Generatorleistung P_{GEN}, in thermische Leistung P_{TH} um. Hierdurch wird direkt die elektrische Einspeiseleistung P_{EIN} verringert. Dass die elektrische Einspeiseleistung P_{EIN} direkt über eine Umwandlung elektrischer Leistung in thermische Leistung ΔP_{TH} verringert wird, ist durch den Block 330 angedeutet.

Sofern der Frequenzgradient der Netzfrequenz df_{N}/dt anschließend wieder kleiner ist als der vorbestimmte Grenzwert G stoppt das Schaltgerät das Umwandeln der elektrischen Leistung.

Übersteigt der Frequenzgradient der Netzfrequenz df_{N}/dt weiterhin den vorbestimmten Grenzwert G, wird weiter elektrische Leistung umgewandelt bzw. der Betrag der umgewandelten elektrischen Leistung weiter erhöht.

Um eine Überlastung des Schaltgerätes zu verhindern, wird bevorzugt die Temperatur des Schaltgerätes überwacht. Dies ist durch den Block 335 angedeutet.

Überschreitet die umgewandelte thermische Energie ΔE_{TH} einen kritischen Grenzwert E_{KRIT}, wird zusätzlich die elektrische Generatorleistung P_{GEN} reduziert, bzw. der elektrische Generator wird so heruntergefahren, dass die Windenergieanlage keine elektrische Leistung mehr einspeist. Dies ist durch den Block 390 angedeutet.

Das erfindungsgemäße Verfahren kann somit unabhängig von der Generatorsteuerung erfolgen, die einen Generator in Abhängigkeit der Netzfrequenz regelt.

Bevorzug wird die Generatorregelung unabhängig von der Steuerung des Schaltgerätes betrieben.

Sofern die Netzfrequenz f_{N} im Wesentlichen kleiner oder gleich der Netznennfrequenz f_{NENN} ist, speist der Generator bevorzugt die gesamte erzeugte elektrische Generatorleistung P_{GEN} als elektrische Einspeiseleistung P_{EIN} in das elektrische Versorgungsnetz ein. Dies ist durch den Block 350 angedeutet.

Die Überprüfung, ob die Netzfrequenz f_{N} kleiner oder gleich der Netznennfrequenz f_{NENN} ist bzw. kleiner oder gleich einer vorbestimmten Soll-Frequenz f_{SOLL} ist, ist durch den Block 355 angedeutet. Beispielsweise beträgt die Netznennfrequenz 50Hz und die Soll-Frequenz 50,1 Hz, der Generator weist dann also in seiner Regelung eine Art Totband auf. Die Erfassung der Netzfrequenz f_{N} kann ferner durch eine Windparksteuereinheit durchgeführt werden, die mittels eines Vergleiches feststellt ob die Netzfrequenz f_{N} die Netznennfrequenz f_{NENN} bzw. die Soll-Frequenz f_{SOLL} übersteigt..

Sofern die Netzfrequenz f_{N} im Wesentlichen kleiner oder gleich der Netznennfrequenz f_{NENN} bzw. der Soll-Frequenz f_{SOLL} ist, speist der Generator weiterhin die gesamte erzeugte elektrische Generatorleistung P_{GEN} als elektrische Einspeiseleistung P_{EIN} in das elektrische Versorgungsnetz ein.

Übersteigt die Netzfrequenz f_{N} aber die Netznennfrequenz f_{NENN} bzw. die Soll-Frequenz f_{SOLL}, wird die elektrische Generatorleistung P_{GEN} reduziert. Der Generator speist dann eine reduzierte elektrische Generatorleistung P_{GEN} als elektrische Einspeiseleistung P_{EIN} in das elektrische Versorgungsnetz ein. Dass der Generator in Abhängigkeit der Netzfrequenz f_{N} bei Übersteigen einer Soll-Frequenz f_{SOLL} eine reduzierte elektrische Generatorleistung in das elektrische Versorgungsnetz als elektrische Einspeiseleistung P_{EIN} einspeist, ist durch den Block 360 angedeutet.

Sofern die Netzfrequenz f_{N} nun die Netznennfrequenz f_{NENN} bzw. die Soll-Frequenz f_{SOLL} wieder unterschreitet bzw. dieser entspricht, behält der elektrische Generator seinen Zustand bei bzw. wird wieder hochgefahren.

Übersteigt die Netzfrequenz f_{N} weiterhin die Netznennfrequenz f_{NENN} bzw. die Soll-Frequenz f_{SOLL}, wird die elektrische Generatorleistung P_{GEN} abermals bzw. weiterhin reduziert.

Übersteigt die Netzfrequenz f_{N} dennoch eine kritische Frequenz f_{KRIT}, die beispielsweise vom Netzbetreiber vorgegeben ist, wird die elektrische Generatorleistung P_{GEN} deutlich reduziert bzw. der Generator in einen Zustand gebracht, in dem er keine elektrische Generatorleistung mehr erzeugt. Dass der elektrische Generator so heruntergefahren wird, dass die Windenergieanlage keine elektrische Leistung mehr einspeist, ist durch den Block 390 angedeutet.

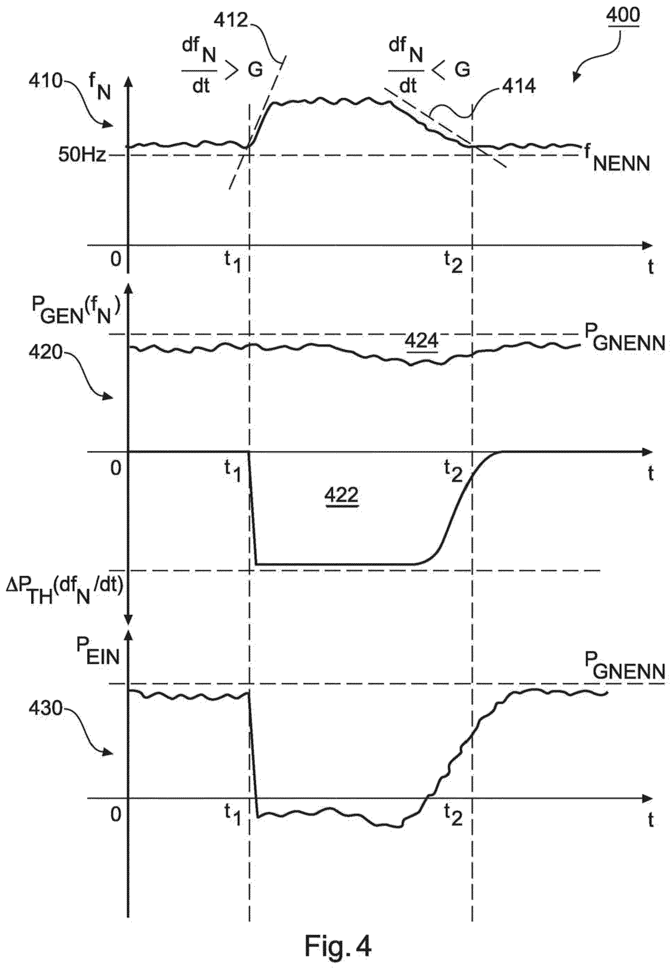

Figur 4 zeigt schematisch eine Überfrequenz-Leistungsaufnahme 400 mit einer Windenergieanlage gemäß einer Ausführungsform. Insbesondere wird dabei die Wirkungsweise des erfindungsgemäßen Verfahrens anhand einer Schwankung der Netzfrequenz f_{N} gezeigt.

Im oberen Diagramm 410 ist die Netzfrequenz f_{N} über der Zeit t abgetragen. Die Netzfrequenz beträgt dabei wenige Hundertstel mehr als die Netznennfrequenz f_{NENN} mit 50Hz, beispielsweise 50,02 Hz, und schwankt leicht. Das elektrische Versorgungsnetz verhält sich also bis zu dem Zeitpunkt t1 im Wesentlichen frequenzstabil, d.h. es weist keine größere Frequenzabweichung oder einen steileren Frequenzgradienten auf.

Im mittleren Diagramm 420 ist die elektrische Generatorleistung P_{GEN} über die Zeit abgetragen. Der Generator wird dabei in Abhängigkeit der Netzfrequenz f_{N} gesteuert und erzeugt die leicht pendelnde Generatorleistung P_{GEN}. Ebenfalls im mittleren Diagramm 420 ist die durch das Schaltgerät umgewandelte thermische Leistung ΔP_{TH} abgebildet. Das Schaltgerät wird dabei in Abhängigkeit des Frequenzgradienten df_{N}/dt gesteuert. Da das elektrische Versorgungsnetz keinen Frequenzgradienten df_{N}/dt aufweist, der den vorbestimmten Grenzwert G überschreitet, wird keine elektrische Leistung, insbesondere elektrische Generatorleistung, in thermische Leistung umgewandelt.

Aus der elektrischen Generatorleistung P_{GEN} und der thermisch umgewandelten Leistung ergibt sich die elektrische Einspeiseleistung P_{EIN}, die sich bis zum Zeitpunkt t1 im Wesentlichen der elektrischen Generatorleistung P_{GEN} entspricht. Dies ist im unteren Diagramm 430 gezeigt.

Zum Zeitpunkt t1 weist das elektrische Versorgungsnetz eine Störung in Form eines Frequenzgradienten 412 auf, der größer ist als der vorbestimmte Grenzwert G. Dies kann beispielsweise durch eine Messeinrichtung erfasst werden.

Das Schaltgerät, insbesondere der Leistungschopper, wird daraufhin aktiviert. Dies ist in der unteren Halbebene 422 des mittleren Diagramms gezeigt. Der elektrische Generator, der in Abhängigkeit einer Frequenzabweichung gesteuert wird, bleibt hiervon, zumindest vorerst, unberührt.

Das Einschalten des Schaltgerätes führt dazu, dass sowohl die gesamte elektrische Generatorleistung P_{GEN} als auch ein Teil elektrische Leistung, die aus dem elektrischen Versorgungsnetz entnommen wurde, um das elektrische Versorgungsnetz zu stabilisieren, in thermische Leistung, insbesondere Wärme, umgewandelt wird. Dies ist im Diagramm 430 dargestellt. Das Schaltgerät verringert somit nicht nur die elektrische Einspeiseleistung auf 0, durch das Umwandeln der elektrischen Generatorleistung in thermische Leistung, sondern wandelt auch noch zusätzliche, überschüssige Leistung, insbesondere Wirkleistung, aus dem elektrischen Versorgungsnetz in thermische Leistung um. Am Anschlusspunkt weist die Windenergieanlage somit eine negative Leistung, insbesondere negative Wirkleistungsbilanz, auf.

Auf Grund dieser erfindungsgemäßen Maßnahme erholt sich die Netzfrequenz wieder langsam, sodass sich die Netzfrequenz mit einem Frequenzgradienten 414 der Netznennfrequenz annähert, wobei der Frequenzgradient 414 kleiner ist als der vorbestimmte Grenzwert.

Das Schaltgerät reduziert hieraufhin seine Leistungsaufnahme der elektrischen Generatorleistung langsam, bis das Versorgungsnetz zum Zeitpunkt t2 wieder einen frequenzstabilen Zustand aufweist.

Während der Ausführung des erfindungsgemäßen Verfahrens wird bevorzugt zudem die elektrische Generatorleistung in Abhängigkeit der Netzfrequenz reduziert, insbesondere dann, wenn eine Frequenzabweichung mehr als 0,2Hz von der Netznennfrequenz beträgt und für mehr als 5 Sekunden anhält. Dies ist exemplarisch im mittleren Diagramm 420 im Bereich 424 dargestellt.

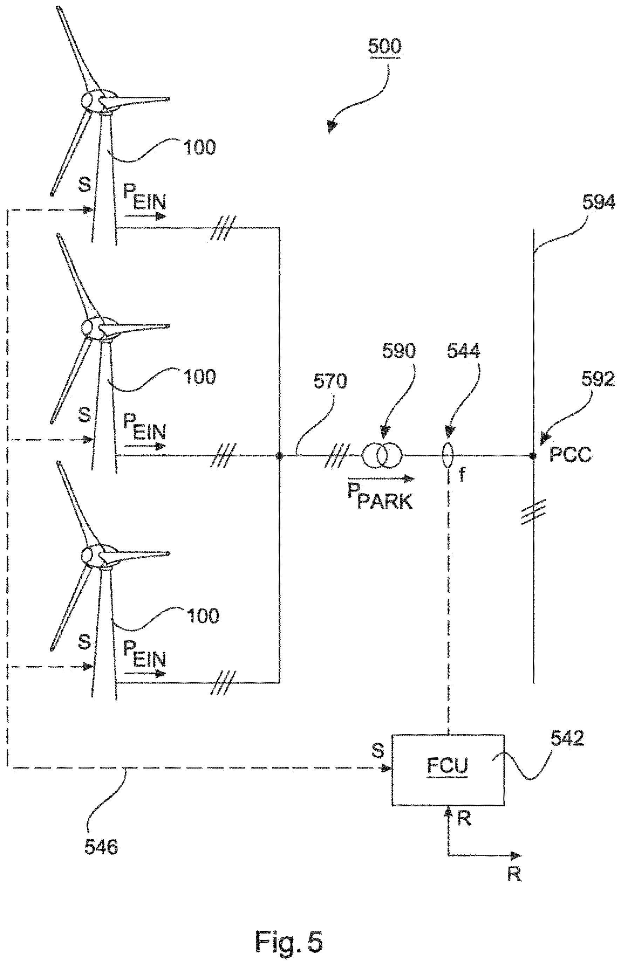

Figur 5 zeigt einen Windpark 500 mit beispielhaft drei Windenergieanlagen 100 gemäß Figur 1. Die drei Windenergieanlagen stehen somit repräsentativ für im Grunde eine beliebige Anzahl von Windenergieanlagen eines Windparks 500. Die Windenergieanlagen 100 stellen ihre elektrische Einspeiseleistung P_{EIN} über ein elektrisches Windparknetz 570 bereit. Diese einzelnen Einspeiseleistungen P_{EIN} werden zusammen als Windparkleistung P_{PARK} über den Windparktransformator 590, der die Spannung im Park hochtransformiert, an einem Netzanschlusspunkt PCC in das Versorgungsnetz 594 eingespeist.

Der Windpark 500 wird dabei über eine Windparksteuereinheit 542, die auch als Farm Control Unit FCU bezeichnet wird, gesteuert. Hierzu erfasst die Windparksteuereinheit 542 mittels Messmitteln 544 die Netzfrequenz und insbesondere die Frequenzabweichung und den Frequenzgradienten. Über die Steuerleitungen 546 kann die Windparksteuereinheit ferner mit den einzelnen Windenergieanlagen kommunizieren. Insbesondere können hierüber Statussignale S der Windenergieanlage, wie beispielsweise deren Energieaufnahmebereitschaft der Schaltgeräte, abgefragt werden. Auf Basis dieser abgefragten Statussignale S kann die Windparksteuereinheit 542 eine negative elektrische Windparkenergie berechnen. Also die Energie, die der Windpark bereit ist aufzunehmen. Diese so berechnete negative Windparkenergie wird dann an einen Versorgungsnetzbetreiber mittels eines Reduzierungssignales R bereitgestellt. Der Versorgungsnetzbetreiber ist somit jeder Zeit darüber informiert, wie viel elektrische Leistung, insbesondere Wirkleistung der Windpark aufnehmen kann und kann diese wiederum auch abfordern. Der Windpark ist somit dazu eingerichtet, wenigstens für 5 Sekunden als Verbraucher für Wirkleistung zu fungieren, insbesondere mit einer negativen Leistung, die der Windparknennleistung entspricht.

## Patentansprüche

1. Verfahren zum Betreiben einer an einem Netzanschlusspunkt eines elektrischen Versorgungsnetzes angeschlossenen Windenergieanlage (100), wobei das elektrische Versorgungsnetz eine Netznennfrequenz (f_{NENN}) aufweist und mit einer Netzfrequenz (f_{N}) betrieben wird und die Windenergieanlage (100), die einen elektrischen Generator (210) mit einer Generatornennleistung umfasst, in Abhängigkeit der Netzfrequenz (f_{N}) regelbar ist, **dadurch gekennzeichnet, dass** das Verfahren den Schritt umfasst:
- Umwandeln elektrischer Leistung in thermische Leistung (ΔP_{TH}), wobei die elektrische Leistung dem elektrischen Versorgungsnetz entnommen wird, um die Netzfrequenz (f_{N}) des Versorgungsnetzes zu stützen, wenn die Netzfrequenz (f_{N}) sich mit einem Frequenzgradienten (df_{N}/dt) ändert, der einen vorbestimmten Grenzwert überschreitet.

2. Verfahren zum Betreiben einer an einem Netzanschlusspunkt eines elektrischen Versorgungsnetzes angeschlossenen Windenergieanlage (100) nach Anspruch 1, ferner umfassend die Schritte:
- Erzeugen einer elektrischen Generatorleistung (P_{GEN}) mit dem elektrischen Generator (210) zum Einspeisen in das elektrische Versorgungsnetz,
- Einspeisen der elektrischen Generatorleistung (P_{GEN}) oder eines Teils davon in das elektrische Versorgungsnetz in Abhängigkeit der Netzfrequenz (f_{N}) als elektrische Einspeiseleistung (P_{EIN}), wobei
- in einer ersten Stützstufe die elektrische Generatorleistung (P_{GEN}) in Abhängigkeit der Netzfrequenz (f_{N}) reduziert wird, um die die elektrische Einspeiseleistung (P_{EIN}) entsprechend zu reduzieren, und
- in einer zweiten Stützstufe die elektrische Einspeiseleistung (P_{EIN}) so verringert wird, dass die elektrische Einspeiseleistung (P_{EIN}) kleiner ist als die elektrische Generatorleistung (P_{GEN}).

3. Verfahren nach Anspruch 1 oder 2, **dadurch gekennzeichnet, dass**
- gemäß der zweiten Stützstufe die elektrische Einspeiseleistung (P_{EIN}) verringert wird, wenn die Netzfrequenz (f_{N}) sich mit einem Frequenzgradienten (df_{N}/dt) ändert, der einen vorbestimmten Grenzgradienten überschreitet.

4. Verfahren nach Anspruch einem der vorstehenden Ansprüche, **dadurch gekennzeichnet, dass**
- gemäß der zweiten Stützstufe die elektrische Einspeiseleistung (P_{EIN}) verringert wird, wenn die Netzfrequenz (f_{N}) oberhalb eines vorbestimmten Frequenzwertes liegt.

5. Verfahren nach einem der vorstehenden Ansprüche, **dadurch gekennzeichnet, dass**
- gemäß der zweiten Stützstufe die elektrische Einspeiseleistung (P_{EIN}) verringert wird, wenn die elektrische Einspeiseleistung (P_{EIN}) für einen vorbestimmten Zeitraum und/oder wenigstens um einen vorbestimmten Überschreitungswert oberhalb einer Soll-Leistung liegt, insbesondere einer Soll-Leistung die kleiner ist als die vom Generator erzeugte elektrische Generatorleistung (P_{GEN}).

6. Verfahren nach einem der vorstehenden Ansprüche, **dadurch gekennzeichnet, dass**
- gemäß der zweiten Stützstufe die elektrische Einspeiseleistung (P_{EIN}) verringert wird, wenn die zweite Stützstufe angefordert wird, insbesondere durch einen Betreiber des elektrischen Versorgungsnetzes oder durch eine Leitwarte.

7. Verfahren nach einem der vorstehenden Ansprüche, **dadurch gekennzeichnet, dass**
- die zweite Stützstufe erst nach einem Durchlaufen der ersten Stützstufe ausgeführt wird.

8. Verfahren nach einem der Ansprüche 2 bis 6, **dadurch gekennzeichnet, dass**
- die zweite Stützstufe unabhängig von der ersten Stützstufe ausgeführt werden kann.

9. Verfahren nach einem der vorstehenden Ansprüche, **dadurch gekennzeichnet, dass**
- das Erzeugen der elektrischen Generatorleistung (P_{GEN}) zum Einspeisen in das elektrische Versorgungsnetz mit dem elektrischen Generator (210) in Abhängigkeit der Netzfrequenz (f_{N}) erfolgt, insbesondere in Abhängigkeit einer Abweichung der Netzfrequenz (f_{N}) von der Netznennfrequenz (f_{NENN}), wobei die elektrische Generatorleistung (P_{GEN}) reduziert wird, wenn die Netzfrequenz (f_{N}) oberhalb einer vorbestimmten Soll-Frequenz liegt.

10. Verfahren nach einem der vorstehenden Ansprüche, **dadurch gekennzeichnet, dass**
- die elektrische Einspeiseleistung (P_{EIN}) so verringert wird, dass die elektrische Einspeisleistung gleich Null ist.

11. Verfahren nach einem der vorstehenden Ansprüche, ferner umfassend den Schritt:
- Entnehmen elektrischer Leistung aus dem elektrischen Versorgungsnetz, insbesondere wenn die Netzfrequenz (f_{N}) sich mit einem Frequenzgradienten (df_{N}/dt) ändert, der einen bzw. den vorbestimmten Grenzgradienten überschreitet und/oder die Netzfrequenz (f_{N}) oberhalb eines bzw. des vorbestimmten Frequenzwertes liegt.

12. Verfahren nach einem der vorstehenden Ansprüche, **dadurch gekennzeichnet, dass**
- einer bzw. der vorbestimmte Grenzgradient:
- 0,5 Hz pro Sekunde ist oder
- zwischen 0,5 Hz pro Sekunde und 2 Hz pro Sekunde liegt oder
- 2 Hz pro Sekunde ist.

13. Verfahren nach einem der vorstehenden Ansprüche, **dadurch gekennzeichnet, dass**
- das Verringern der elektrischen Einspeiseleistung (P_{EIN}) in der zweiten Stützstufe so erfolgt, dass die elektrische Einspeiseleistung (P_{EIN}) gleich der elektrischen Generatorleistung (P_{GEN}) ist, wenn die Netzfrequenz (f_{N}) sich mit einem Frequenzgradienten (df_{N}/dt) ändert, der den vorbestimmten Grenzgradienten unterschreitet, insbesondere wieder unterschreitet.

14. Verfahren nach einem der vorstehenden Ansprüche, **dadurch gekennzeichnet, dass**
- das Verringern der elektrischen Einspeiseleistung (P_{EIN}) in der zweiten Stützstufe ein Verbrauchen elektrischer Leistung, insbesondere elektrischer Generatorleistung (P_{GEN}) und/oder elektrischer Leistung aus dem Versorgungsnetz, umfasst, wobei das Verbrauchen zumindest teilweise, bevorzugt vollständig, mittels eines Schaltgerät (280)es zum Umwandeln elektrischer Leistung in thermische Leistung (ΔP_{TH}) erfolgt.

15. Verfahren nach einem der vorstehenden Ansprüche, **dadurch gekennzeichnet, dass**
- ein bzw. das Schaltgerät (280) zum Umwandeln elektrischer Leistung in thermische Leistung (ΔP_{TH}) dazu eingerichtet ist, wenigstens 3 Sekunden lang, insbesondere wenigstens 5 Sekunden lang, elektrische Leistung, die der Generatornennleistung entspricht, in thermische Leistung (ΔP_{TH}) umzuwandeln.

16. Verfahren nach einem der vorstehenden Ansprüche, **dadurch gekennzeichnet, dass**
- ein bzw. das Schaltgerät (280) zum Umwandeln elektrischer Leistung in thermische Leistung (ΔP_{TH}) dazu eingerichtet ist, wenigstens 3 Sekunden lang, insbesondere wenigstens 5 Sekunden lang, elektrische Leistung, die der doppelten Generatornennleistung entspricht, in thermische Leistung (ΔP_{TH}) umzuwandeln.

17. Verfahren nach einem der Ansprüche 14 bis 16, **dadurch gekennzeichnet, dass**
- das Schaltgerät (280) wenigstens einen Chopper umfasst.

18. Verfahren nach einem Ansprüche 14 bis 17, **dadurch gekennzeichnet, dass**
- das Schaltgerät (280) als Chopperbank ausgebildet ist.

19. Windenergieanlage (100) umfassend einen Generator mit einer Generatornennleistung zum Erzeugen einer elektrischen Generatorleistung (P_{GEN}), wobei die Windenergieanlage (100) dazu vorbereitet ist, an einen Netzanschlusspunkt eines elektrischen Versorgungsnetzes angeschlossen zu werden, um die elektrische Generatorleistung (P_{GEN}) oder einen Teil davon in das elektrische Versorgungsnetz als elektrische Einspeiseleistung (P_{EIN}) in Abhängigkeit einer Netzfrequenz (f_{N}) des elektrischen Versorgungsnetzes einzuspeisen, wobei die Windenergieanlage (100) dazu eingerichtet ist, dass
- in einer ersten Stützstufe die elektrische Generatorleistung (P_{GEN}) in Abhängigkeit der Netzfrequenz (f_{N}) reduziert wird, um die die elektrische Einspeiseleistung (P_{EIN}) entsprechend zu reduzieren, und
- in einer zweiten Stützstufe die elektrische Einspeiseleistung (P_{EIN}) so verringert wird, dass die elektrische Einspeiseleistung (P_{EIN}) kleiner ist als die elektrische Generatorleistung (P_{GEN}), die Windenergieanlage (100), dazu eingerichtet ist, ein Verfahren nach einem der Ansprüche 1 bis 18 durchzuführen.

20. Windenergieanlage (100) nach Anspruch 19, **gekennzeichnet durch**
- ein Schaltgerät (280) zum Umwandeln elektrischer Leistung in thermische Leistung (ΔP_{TH}), wobei das Schaltgerät (280) dazu eingerichtet ist, zumindest einen Teil der elektrischen Generatorleistung (P_{GEN}) zu verbrauchen, um die elektrische Einspeiseleistung (P_{EIN}) zu verringern.

21. Windenergieanlage (100) nach Anspruch 20, **dadurch gekennzeichnet, dass**
- das Schaltgerät (280) zum Umwandeln elektrischer Leistung in thermische Leistung (ΔP_{TH}) dazu eingerichtet ist, wenigstens 3 Sekunden lang, insbesondere wenigstens 5 Sekunden lang, elektrische Leistung, die einer, bevorzugt doppelten, Generatornennleistung entspricht, in thermische Leistung (ΔP_{TH}) umzuwandeln.

22. Windenergieanlage (100) nach Anspruch 20 oder 21, **dadurch gekennzeichnet, dass**
- das Schaltgerät (280) als Chopperbank ausgebildet ist und/oder einen Gleichrichter umfasst.

23. Windpark (500) umfassend wenigstens eine Windenergieanlage (100) nach einem der Ansprüche 19 bis 22, **gekennzeichnet durch** eine Windparksteuereinheit die dazu eingerichtet, Steuersignale (S) an die Windenergieanlage (100) des Windparks (500) zu senden und von den Windenergieanlage (100)n des Windparks (500) bereitgestellte Statussignale zu empfangen, um eine negative elektrische Windparkleistung oder -energie zu ermitteln.

## Claims

1. A method for operating a wind power installation (100) which is connected to a network connection point of an electrical supply network, wherein the electrical supply network has a network nominal frequency (f_{NENN}) and is operated at a network frequency (f_{N}), and the wind power installation (100) which comprises an electrical generator (210) with a generator nominal power can be regulated on the basis of the network frequency (f_{N}), **characterized in that**, that the method comprising the step of:
- converting electrical power into thermal power (ΔP_{TH}), wherein the electrical power is removed from the electrical supply network in order to support the network frequency of the supply network if the network frequency (f_{N}) changes with a frequency gradient (df_{N}/dt), which exceeds a predetermined limit value.

2. A method for operating a wind power installation (100) which is connected to a network connection point of an electrical supply network as claimed in claim 1, comprising the steps of:
- using the electrical generator (210) to produce an electrical generator power (P_{GEN}) for feeding into the electrical supply network,
- feeding the electrical generator power (P_{GEN}) or a part of it into the electrical supply network as electrical feed-in power (P_{EIN}) on the basis of the network frequency (f_{N}), wherein
- in a first supporting stage, the electrical generator power (P_{GEN}) is reduced on the basis of the network frequency (f_{N}) in order to accordingly reduce the electrical feed-in power (P_{EIN}), and
- in a second supporting stage, the electrical feed-in power (P_{EIN}) is reduced such that the electrical feed-in power (P_{EIN}) is less than the electrical generator power (PGEN).

3. The method as claimed in claim 1 or 2, **characterized in that**
- according to the second supporting stage, the electrical feed-in power (P_{EIN}) is reduced if the network frequency (f_{N}) changes with a frequency gradient (df_{N}/dt) which exceeds a predetermined limiting gradient.

4. The method as claimed in one of the preceding claims, **characterized in that**
- according to the second supporting stage, the electrical feed-in power (P_{EIN}) is reduced if the network frequency (f_{N}) is above a predetermined frequency value.

5. The method as claimed in one of the preceding claims, **characterized in that**
- according to the second supporting stage, the electrical feed-in power (P_{EIN}) is reduced if the electrical feed-in power (P_{EIN}) is above a desired power for a predetermined period and/or at least by a predetermined exceedance value, in particular a desired power which is less than the electrical generator power (P_{GEN}) produced by the generator.

6. The method as claimed in one of the preceding claims, **characterized in that**
- according to the second supporting stage, the electrical feed-in power (P_{EIN}) is reduced if the second supporting stage is requested, in particular by an operator of the electrical supply network or by a control room.

7. The method as claimed in one of the preceding claims, **characterized in that**
- the second supporting stage is carried out only after the first supporting stage has been run through.

8. The method as claimed in one of claims 2 to 6, **characterized in that**
- the second supporting stage can be carried out independently of the first supporting stage.

9. The method as claimed in one of the preceding claims, **characterized in that**
- the electrical generator power (P_{GEN}) for feeding into the electrical supply network is produced using the electrical generator (210) on the basis of the network frequency (f_{N}), in particular on the basis of a deviation of the network frequency (f_{N}) from the network nominal frequency (f_{NENN}), wherein the electrical generator power is reduced if the network frequency (f_{N}) is above a predetermined desired frequency.

10. The method as claimed in one of the preceding claims, **characterized in that**
- the electrical feed-in power (P_{EIN}) is reduced such that the electrical feed-in power is equal to zero.

11. The method as claimed in one of the preceding claims, also comprising the step of:
- removing electrical power from the electrical supply network, in particular if the network frequency (f_{N}) changes with a frequency gradient (df_{N}/dt) which exceeds a or the predetermined limiting gradient and/or the network frequency (f_{N}) is above a or the predetermined frequency value.

12. The method as claimed in one of the preceding claims, **characterized in that**
- a or the predetermined limiting gradient is:
- 0.5 Hz per second or
- between 0.5 Hz per second and 2 Hz per second or
- 2 Hz per second.

13. The method as claimed in one of the preceding claims, **characterized in that**
- the electrical feed-in power (P_{EIN}) is reduced in the second supporting stage such that the electrical feed-in power (P_{EIN}) is equal to the electrical generator power (P_{GEN}) if the network frequency (f_{N}) changes with a frequency gradient (df_{N}/dt) which undershoots the predetermined limiting gradient, in particular undershoots said gradient again.

14. The method as claimed in one of the preceding claims, **characterized in that**
- the reduction of the electrical feed-in power (P_{EIN}) in the second supporting stage comprises consuming electrical power, in particular electrical generator power (P_{GEN}) and/or electrical power from the supply network, wherein the consumption is carried out at least partially, preferably completely, by means of a switching device (280) for converting electrical power into thermal power (ΔP_{TH}).

15. The method as claimed in one of the preceding claims, **characterized in that**
- a or the switching device for converting electrical power into thermal power is set up to convert electrical power corresponding to the generator nominal power into thermal power for at least three seconds, in particular at least five seconds.

16. The method as claimed in one of the preceding claims, **characterized in that**
- a or the switching device (280) for converting electrical power into thermal power (ΔP_{TH}) is set up to convert electrical power corresponding to twice the generator nominal power into thermal power (ΔP_{TH}) for at least three seconds, in particular at least five seconds.

17. The method as claimed in one of claims 14 to 16, **characterized in that**
- the switching device (280) comprises at least one chopper.

18. The method as claimed in one of claims 14 to 17, **characterized in that**
- the switching device (280) is in the form of a chopper bank.

19. A wind power installation (100) comprising a generator with a generator nominal power for producing an electrical generator power (P_{GEN}), wherein the wind power installation (100) is set up to be connected to a network connection point of an electrical supply network in order to feed the electrical generator power (P_{GEN}) or a part of it into the electrical supply network as electrical feed-in power (P_{EIN}) on the basis of a network frequency (f_{N}) of the electrical supply network, wherein the wind power installation (100) is set up such that
- in a first supporting stage, the electrical generator power (P_{GEN}) is reduced on the basis of the network frequency (f_{N}) in order to accordingly reduce the electrical feed-in power (P_{EIN}), and
- in a second supporting stage, the electrical feed-in power (P_{EIN}) is reduced such that the electrical feed-in power (P_{EIN}) is less than the electrical generator power (P_{GEN}), the wind power installation (100) is set up to carry out a method as claimed in one of claims 1 to 18.

20. The wind power installation (100) as claimed in claim 19, **characterized by**
- a switching device (280) for converting electrical power into thermal power (ΔP_{TH}), wherein the switching device (280) is set up to consume at least part of the electrical generator power (P_{GEN}) in order to reduce the electrical feed-in power (P_{EIN}).

21. The wind power installation (100) as claimed in claim 20, **characterized in that**
- the switching device (280) for converting electrical power into thermal power (ΔP_{TH}) is set up to convert electrical power corresponding to a generator nominal power, preferably twice a generator nominal power, into thermal power (ΔP_{TH}) for at least three seconds, in particular at least five seconds.

22. The wind power installation (100) as claimed in claim 20 or 21, **characterized in that**
- the switching device (280) is in the form of a chopper bank and/or comprises a rectifier.

23. A wind farm (500) comprising at least one wind power installation (100) as claimed in one of claims 19 to 22, **characterized by** a wind farm control unit which is set up to transmit control signals (S) to the wind power installation (100) in the wind farm (500) and to receive status signals provided by the wind power installations (100) in the wind farm (500) in order to determine a negative electrical wind farm power or energy.

## Revendications

1. Procédé de fonctionnement d'une éolienne (100) raccordée à un point de raccordement au réseau d'un réseau d'alimentation électrique, dans lequel le réseau d'alimentation électrique présente une fréquence nominale de réseau (f_{NENN}) et fonctionne à une fréquence de réseau (f_{N}) et l'éolienne (100), qui comprend un générateur électrique (210) avec une puissance nominale de générateur, peut être régulée en fonction de la fréquence de réseau (f_{N}), **caractérisé en ce que** le procédé comprend l'étape :
- de la conversion de puissance électrique en puissance thermique (ΔP_{TH}), dans lequel la puissance électrique est prélevée du réseau d'alimentation électrique pour soutenir la fréquence de réseau (f_{N}) du réseau d'alimentation lorsque la fréquence de réseau (f_{N}) change avec un gradient de fréquence (df_{N}/dt) qui dépasse une valeur limite prédéfinie.

2. Procédé de fonctionnement d'une éolienne (100) raccordée à un point de raccordement au réseau d'un réseau d'alimentation électrique selon la revendication 1, comprenant en outre les étapes :
- de génération d'une puissance de générateur électrique (P_{GEN}) avec le générateur électrique (210) pour l'injection dans le réseau d'alimentation électrique,
- d'injection de la puissance de générateur électrique (P_{GEN}) ou d'une partie de celle-ci dans le réseau d'alimentation électrique en fonction de la fréquence du réseau (f_{N}) sous forme de puissance d'injection électrique (P_{EIN}), dans lequel
- dans une première phase de soutien, la puissance de générateur électrique (P_{GEN}) est réduite en fonction de la fréquence du réseau (f_{N}) pour réduire en conséquence la puissance d'injection électrique (P_{EIN}), et
- dans une deuxième phase de soutien, la puissance d'injection électrique (P_{EIN}) est réduite de telle sorte que la puissance d'injection électrique (P_{EIN}) est inférieure à la puissance de générateur électrique (P_{GEN}).

3. Procédé selon la revendication 1 ou 2, **caractérisé en ce que**
- selon la deuxième phase de soutien, la puissance d'injection électrique (P_{EIN}) est réduite lorsque la fréquence de réseau (f_{N}) change avec un gradient de fréquence (df_{N}/dt) qui dépasse un gradient limite prédéfini.

4. Procédé selon l'une quelconque des revendications précédentes, **caractérisé en ce que**
- selon la deuxième phase de soutien, la puissance d'injection électrique (P_{EIN}) est réduite lorsque la fréquence de réseau (f_{N}) est supérieure à une valeur de fréquence prédéfinie.

5. Procédé selon l'une quelconque des revendications précédentes, **caractérisé en ce que**
- selon la deuxième phase de soutien, la puissance d'injection électrique (P_{EIN}) est réduite lorsque la puissance d'injection électrique (P_{EIN}) est supérieure à une puissance de consigne, en particulier une puissance de consigne inférieure à la puissance de générateur électrique (P_{GEN}) générée par le générateur, pendant une durée prédéfinie et/ou d'au moins une valeur de dépassement prédéfinie.

6. Procédé selon l'une quelconque des revendications précédentes, **caractérisé en ce que**
- selon la deuxième phase de soutien, la puissance d'injection électrique (P_{EIN}) est réduite lorsque la deuxième phase de soutien est demandée, en particulier par un exploitant du réseau d'alimentation électrique ou par une salle de commande.

7. Procédé selon l'une quelconque des revendications précédentes, **caractérisé en ce que**
- la deuxième phase de soutien n'est exécutée qu'après un passage de la première phase de soutien.

8. Procédé selon l'une quelconque des revendications 2 à 6, **caractérisé en ce que**
- la deuxième phase de soutien peut être exécutée indépendamment de la première phase de soutien.

9. Procédé selon l'une quelconque des revendications précédentes, **caractérisé en ce que**
- la génération de la puissance de générateur électrique (P_{GEN}) pour l'injection dans le réseau d'alimentation électrique avec le générateur électrique (210) est effectuée en fonction de la fréquence du réseau (f_{N}), en particulier en fonction d'un écart de la fréquence du réseau (f_{N}) par rapport à la fréquence nominale du réseau (f_{NENN}), dans lequel la puissance de générateur électrique (P_{GEN}) est réduite lorsque la fréquence de réseau (f_{N}) est supérieure à une fréquence de consigne prédéfinie.

10. Procédé selon l'une quelconque des revendications précédentes, **caractérisé en ce que**
- la puissance d'injection électrique (P_{EIN}) est réduite de telle sorte que la puissance d'injection électrique est égale à zéro.

11. Procédé selon l'une quelconque des revendications précédentes, comprenant en outre l'étape :
- de prélèvement de puissance électrique du réseau d'alimentation électrique, en particulier lorsque la fréquence de réseau (f_{N}) change avec un gradient de fréquence (df_{N}/dt) qui dépasse un ou le gradient limite prédéfini et/ou lorsque la fréquence de réseau (f_{N}) est supérieure à une ou la valeur de fréquence prédéfinie.

12. Procédé selon l'une quelconque des revendications précédentes, **caractérisé en ce que**
- un ou le gradient limite prédéfini :
- est de 0,5 Hz par seconde ou
- est compris entre 0,5 Hz par seconde et 2 Hz par seconde ou
- est de 2 Hz par seconde.

13. Procédé selon l'une quelconque des revendications précédentes, **caractérisé en ce que**
- la réduction de la puissance d'injection électrique (P_{EIN}) dans la deuxième phase de soutien est effectuée de telle sorte que la puissance d'injection électrique (P_{EIN}) est égale à la puissance de générateur électrique (P_{GEN}) lorsque la fréquence de réseau (f_{N}) change avec un gradient de fréquence (df_{N}/dt) qui ne dépasse pas, en particulier ne dépasse pas à nouveau, le gradient limite prédéfini.

14. Procédé selon l'une quelconque des revendications précédentes, **caractérisé en ce que**
- la réduction de la puissance d'injection électrique (P_{EIN}) dans la deuxième phase de soutien comprend une consommation de puissance électrique, en particulier de puissance de générateur électrique (P_{GEN}) et/ou de puissance électrique provenant du réseau d'alimentation, dans lequel la consommation est effectuée au moins en partie, de manière préférée totalement, au moyen d'un appareil de commutation (280) pour convertir de la puissance électrique en puissance thermique (ΔP_{TH}).

15. Procédé selon l'une quelconque des revendications précédentes, **caractérisé en ce que**
- un ou l'appareil de commutation (280) de conversion de puissance électrique en puissance thermique (ΔP_{TH}) est mis au point pour convertir pendant au moins 3 secondes, en particulier pendant au moins 5 secondes, une puissance électrique correspondant à la puissance nominale de générateur en puissance thermique (ΔP_{TH}).

16. Procédé selon l'une quelconque des revendications précédentes, **caractérisé en ce que**
- un ou l'appareil de commutation (280) de conversion de puissance électrique en puissance thermique (ΔP_{TH}) est mis au point pour convertir pendant au moins 3 secondes, en particulier pendant au moins 5 secondes, une puissance électrique correspondant au double de la puissance nominale de générateur en puissance thermique (ΔP_{TH}).

17. Procédé selon l'une quelconque des revendications 14 à 16, **caractérisé en ce que**
- l'appareil de commutation (280) comprend au moins un hacheur.

18. Procédé selon l'une quelconque des revendications 14 à 17, **caractérisé en ce que**
- l'appareil de commutation (280) est réalisé comme un banc de hacheurs.

19. Éolienne (100) comprenant un générateur avec une puissance nominale de générateur pour générer une puissance de générateur électrique (P_{GEN}), dans laquelle l'éolienne (100) est préparée pour être raccordée à un point de raccordement au réseau d'un réseau d'alimentation électrique pour injecter la puissance de générateur électrique (P_{GEN}) ou une partie de celle-ci dans le réseau d'alimentation électrique sous forme de puissance d'injection électrique (P_{EIN}) en fonction d'une fréquence de réseau (f_{N}) du réseau d'alimentation électrique, dans laquelle l'éolienne (100) est mise au point pour
- dans une première phase de soutien, la puissance de générateur électrique (P_{GEN}) est réduite en fonction de la fréquence du réseau (f_{N}) pour réduire en conséquence la puissance d'injection électrique (P_{EIN}), et
- réduire, dans une deuxième phase de soutien, la puissance d'injection électrique (P_{EIN}) de telle sorte que la puissance d'injection électrique (P_{EIN}) est inférieure à la puissance de générateur électrique (P_{GEN}), l'éolienne (100) étant mise au point pour réaliser un procédé selon l'une quelconque des revendications 1 à 18.

20. Éolienne (100) selon la revendication 19, **caractérisée par**
- un appareil de commutation (280) de conversion de puissance électrique en puissance thermique (ΔP_{TH}), dans laquelle l'appareil de commutation (280) est mis au point pour consommer au moins une partie de la puissance de générateur électrique (P_{GEN}) pour réduire la puissance d'injection électrique (P_{EIN}).

21. Éolienne (100) selon la revendication 20, **caractérisée en ce que**
- l'appareil de commutation (280) de conversion de puissance électrique en puissance thermique (ΔP_{TH}) est mis au point pour convertir pendant au moins 3 secondes, en particulier pendant au moins 5 secondes, une puissance électrique, correspondant à une puissance nominale de générateur, de manière préférée double, en puissance thermique (ΔP_{TH}).

22. Éolienne (100) selon la revendication 20 ou 21, **caractérisée en ce que**
- l'appareil de commutation (280) est réalisé comme un banc de hacheurs et/ou comprend un redresseur.

23. Parc éolien (500) comprenant au moins une éolienne (100) selon l'une quelconque des revendications 19 à 22, **caractérisé par** une unité de commande de parc éolien qui est mise au point pour envoyer des signaux de commande (S) à l'éolienne (100) du parc éolien (500) et recevoir des signaux d'état fournis par l'éolienne (100) n du parc éolien (500) pour déterminer une puissance ou une énergie électrique négative du parc éolien.
